# EUROPÄISCHE PATENTSCHRIFT

(11) **EP 2 935 914 B1**
(45) Veröffentlichungstag und Bekanntmachung des Hinweises auf die Patenterteilung: **28.12.2016**
(21) Anmeldenummer: 13792007.0
(22) Anmeldetag: 18.11.2013
(51) Int. Cl.: F16C 11/06

(54) **GELENKEINRICHTUNG FÜR EIN KRAFTFAHRZEUG**
JOINT DEVICE FOR A MOTOR VEHICLE
DISPOSITIF D'ARTICULATION POUR VÉHICULE AUTOMOBILE

(30) Priorität: 18.12.2012 DE 102012223609
(43) Veröffentlichungstag der Anmeldung: 28.10.2015
(73) Patentinhaber: ZF Friedrichshafen AG, 88046 Friedrichshafen (DE)
(72) Erfinder: VON DER HAAR, Lars, 49577 Kettenkamp (DE); HELMS, Heinfried, 49152 Bad Essen (DE); MARQUARDT, Franz-Josef, 49124 Georgsmarienhütte (DE); DONZELMANN, Jens, 49635 Badbergen (DE); RUDOLPH, Holger, 49152 bad Essen (DE); ROSENGARTEN, Andreas, 49186 Bad Iburg (DE)
(86) Internationale Anmeldenummer: PCT/EP2013/074003
(87) Internationale Veröffentlichungsnummer: WO 2014/095188

(56) Entgegenhaltungen:
- DE-A1- 2 150 354
- DE-A1-102004 055 961
- DE-B- 1 085 775
- DE-U- 7 336 029
- FR-A1- 2 315 034

## Beschreibung

Die Erfindung betrifft eine Gelenkeinrichtung, umfassend zumindest einen Gelenkzapfen und zumindest ein diesen ganz oder teilweise umgreifendes Gehäuse, wobei der Gelenkzapfen und das Gehäuse relativ zueinander zumindest schwenkbeweglich sind und der Gelenkeinrichtung eine gesonderte Verliersicherung für das Gehäuse zugeordnet ist, nach dem Oberbegriff des Anspruchs 1.

Bei Gelenkeinrichtungetl dieser Art, die beispielsweise als Kugelgelenke ausgebildet sind, ist es häufig erforderlich, eine gegen Schmutz und Wasser wirksame Abdichtung vorzugehen, um eine Störung der Beweglichkeit der Teile gegeneinander, etwa durch Abrieb oder Ausspülen eines Schmiermittels, zu verhindern. Ist jedoch eine solche Abdichtung beschädigt, kann Feuchtigkeit in das Gelenk gelangen, so dass eine auf dem Zapfen angeordnete Kugelhülse und/oder eine diese beweglich aufnehmende äußere Kugelschale beschädigt wird. Das Gelenk bekommt dann Spiel, und im Lauf der Zeit kann sich die Kugelhülse durch die Kugelschale und das Gehäuse durcharbeiten, so dass die Gefahr besteht, dass das Gehäuse vom Gelenkzapfen abhebt und damit eine führende und haltende Wirkung der Gelenkeinrichtung verlorengeht. Dies stellt ein ernsthaftes Sicherheitsrisiko dar.

Um hier eine Abhilfe zu schaffen, ist es bekannt, in dem Gelenkzapfen einen T-förmigen Anker festzulegen, der mit einem Querriegel nach oben aus dem Zapfen herausragt und darüber in ein Gegenstück eines Gehäuses eingreift. Ein solcher Anker ist jedoch in axialer Blickrichtung unsymmetrisch, so dass einerseits das Schwenken des Gehäuses gegenüber dem Zapfen in bestimmten Richtungen deutlich behindert wird und andererseits die Montage erschwert ist. Zudem müssen im Deckel oder Gehäuse Konterflächen geschaffen werden, die der herausstehende Querriegel hintergreift. Die Schaffung derartiger Flächen ist konstruktiv aufwendig und erfordert Hinterschneidungen oder den Einsatz zusätzlicher Teile.

DE 10 2004 055 961 A1 offenbart die Merkmale des Oberbegriffs des Anspruchs 1.

Der Erfindung liegt das Problem zugrunde, hier eine Verbesserung zu erreichen.

Die Erfindung löst dieses Problem durch ein Kraftfahrzeug mit den Merkmalen des Anspruchs 1. Zu vorteilhaften Ausgestaltungen und Weiterbildungen der Erfindung wird auf die weiteren Ansprüche 2 bis 14 verwiesen.

Mit der Erfindung nach Anspruch 1 ist dadurch, dass die Verliersicherung von einem Bereich des Gehäuses ausgeht und in einen zumindest im Wesentlichen axialen Kanal des Zapfens eingreift, nicht mehr erforderlich, dass die Verliersicherung von der Rotationssymmetrie um die axiale Richtung abweicht. Die Montage ist dadurch erleichtert. Die Schwenkbarkeit des Gelenks bleibt sehr vorteilhaft in jeder Richtung voll erhalten.

Wenn die Verliersicherung von einem Bereich des Gehäuses ausgeht, der in zumindest einer Schwenkstellung des Gelenks in axialer Verlängerung des Zapfens gelegen ist, kann die Verliersicherung beispielsweise von einem dem Gehäuse zugeordneten Deckelteil ausgehen, das den Zapfen zentral übergreift. Die Verliersicherung kann je nach Ausbildung einstückig mit diesem Deckelteil oder anderem Teil des Gehäuses ausgebildet sein oder daran befestigt sein. Insbesondere in dieser Schwenkstellung ist die Anordnung der Verliersicherung in axialer Draufsicht rotationssymmetrisch, so dass es möglich ist, aus dieser Schwenkstellung heraus die Gelenkeinrichtung zu allen Seiten mit gleichgroßen Winkeln auszulenken.

Sofern der Bereich des Gehäuses, von dem die Verliersicherung ausgeht, ein in einem starren Gehäusebereich gehaltener Deckelteil ist, kann die Montage sehr einfach sein. Beispielsweise kann so gleichzeitig bei der Montage eines Deckelteils auch die Verliersicherung in Eingriff in den Zapfen gelangen.

Eine Version der Erfindung sieht vor, dass die Verliersicherung einen elastisch verformbaren Schaftbereich umfasst. Damit kann beispielsweise bei der Deckelmontage der Schaftbereich durch einen frei belassenen Eingriffskanal des Zapfens fallen und in diesem oder auf der dem Deckelteil axial gegenüberliegenden Seite gekontert werden. Der Kanal weist dabei günstig ein hinreichendes Übermaß gegenüber dem Durchmesser oder der Quererstreckung des Schaftbereichs auf, so dass auch bei Auswinkelung des Gelenks dieser Schaftbereich keinen Kontakt zum Flansch bekommt. Eine mechanische Beschädigung des Zapfens oder der Verliersicherung ist dadurch ausgeschlossen.

Sehr preiswert und konstruktiv einfach kann der elastisch verformbare Schaftbereich von einem Drahtseil gebildet sein. Auch ein elastischer Kunststoffstab oder -seil kann möglich sein.

Wenn die Verliersicherung den Zapfen axial vollständig durchgreift, kann diese am axial jenseitigen Ende des Zapfens selbst oder auch an einer Flanschplatte, die den Zapfen an einem Bauteil, zum Beispiel einem Differentialgehäuse, hält, gekontert sein. In den Figuren ist zu erkennen, dass der Zapfen zusammen mit der Flanschplatte.einstückig ausgebildet sein kann.

Eine weitere Version der Erfindung sieht vor, dass die Verliersicherung von dem Gehäusebereich, an dem sie gehalten ist, einen starren Schaftbereich umfasst und sich innerhalb der axialen Erstreckung des Zapfens abstützt. Beispielsweise kann hierbei der starre Schaftbereich in einen erweiterten Kopfbereich einmünden, der sich im axialen Kanal des Zapfens und mit seinem Zentrum im Drehpunkt des Gelenks befindet. Die Auslenkung des Gelenks ist auch hier nicht eingeschränkt. Bei einer solchen Beschädigung des Gelenks, die die Verliersicherung wirksam werden lassen würde, würde der Kopfbereich dann beispielsweise an Schultern im Innern des Zapfens anschlagen und könnte einen dort liegenden Sensor betätigen, der ein Signal über die Beschädigung der Gelenkeinrichtung ausgibt.

Ein Kraftfahrzeug mit zumindest einer Gelenkeinrichtung nach einem der Ansprüche 1 bis 12 ist gesondert beansprucht.

Insbesondere kann ein solches Kraftfahrzeug ein Nutzkraftwagen (NKW) sein, wobei eine solche Gelenkeinrichtung u. a. zur Führung einer Achse dieses Kraftfahrzeuges Über einen oder mehrere mittelbar oder unmittelbar von einem oder mehreren Rahmenteilen zur Gelenkeinrichtung führenden Lenker(n) dient. Typisch kann hierzu eine Dreiecklenkeranordnung zur Abstützung einer Hinterachse erfindungsgemäß ausgebildet sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig.-1: eine schematische Draufsicht auf einen Nutzkraftwagen mit beispielhaft einer über zwei Dreieckslenker an einem Hinterächsdifferential angreifenden Gelenkeinrichtung,
- Fig. 2: eine perspektivische Detailansicht von schräg oben einer Gelenkeinrichtung mit zwei Dreieckslenkern und einem zentralen Gehäuse, das einen von einer Flanschplatte aufragenden Zapfen übergreift, in einer schematisch dargestellten ersten Ausführung der Erfindung,
- Fig. 3: eine Querschnittsdarstellung der Gelenkeinrichtung, etwa entsprechend dem Schnitt III-III in Figur 2,
- Fig. 4: eine Detaildarstellung einer beispielhaften Verliersicherung mit einem Drahtseil,
- Fig. 5: eine ähnliche Darstellung wie Figur 4, jedoch einer weiteren Ausführung der Erfindung mit einem im Drehpunkt des Zapfens verankerten Kugelkopf, hier in maximal ausgelenkter Stellung der Gelenkeinrichtung,
- Fig. 6: eine ähnliche Ansicht wie Figur 5, jedoch in Nullstellung der Gelenkeinrichtung, wobei der Kugelkopf hier nur beispielhaft unten abgeflacht ist,
- Fig. 6a: eine ähnliche Ansicht wie Figur 6, jedoch mit einer Verliersicherung, die den Deckelteil durchgreift und außeriseitig gekontert ist,
- Fig. 7: eine Detaildarstellung der Ausführung nach Figur 6 mit in Normalstellung befindlicher Verliereinrichtung (links) und mit auf Zug beanspruchter Verliereinrichtung (rechts).

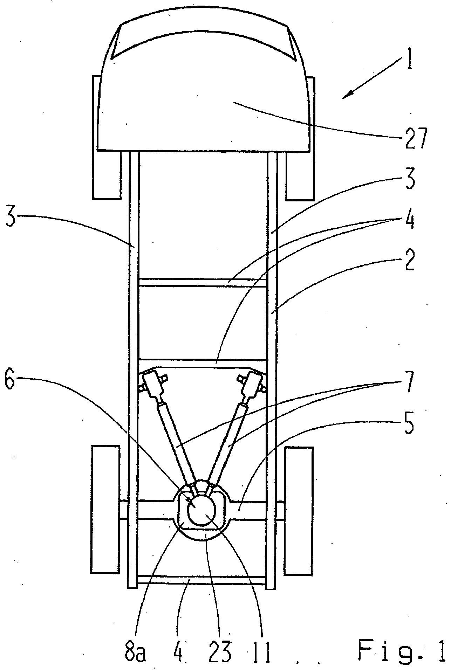

Das in Figur 1 nur schematisch dargestellte Kraftfahrzeug 1 bildet hier einen Nutzkraftwagen (NKW) aus und weist einen Fahrzeugrahmen 2 auf. Ein solcher Fahrzeugrahmen 2 kann typisch zwei seitliche Längsträger 3 und mehrere Querträger 4 umfassen und insgesamt unterschiedlich ausgebildet sein. An dem Fahrzeugrahmen 2 ist hier beispielhaft zumindest eine Achse 5, zum Beispiel eine Hinterachse, gehalten.

Auch beispielsweise ein Baufahrzeug oder ein Offroadfahrzeug kann erfindungsgemäß ausgebildet sein.

Das gezeichnete Kraftfahrzeug 1 ist mit zumindest einer Gelenkeinrichtung 6 versehen; auch mehrere Gelenkeiririchtungen der unten noch näher beschriebenen Art sind möglich. Die hier gezeichnete Gelenkeinrichtung 6 dient zur Führung einer Achse 5 dieses Kraftfahrzeuges 1. Hierfür sind ein oder mehrere (hier zwei) mittelbar oder unmittelbar von einem oder mehreren Rahmenteilen.3, 4 zur Gelenkeinrichtung 6 führende Lenker 7 in einer Dreiecksanordnung vorgesehen. Auch eine X-förmige Lenkeranordnung mit einer Vierpunktanbindung wird hier oft verwendet. Auch weitere mit dem Fahrwerk in Verbindung steheride Teile können über erfindungsgemäße Gelenkeinrichtungen 6 angebunden sein.

Die Gelenkeinrichtung 6 selbst umfasst hier einen axial erstreckten Gelenkzapfen 8, der eine im Wesentlichen kugelförmige Erweiterung 9 aufweist. Diese kann integral am Gelenkzapfen 8 ausgebildet sein oder eine separate Baueinheit bilden und gegenüber einer aufnehmenden Gelenkschale 10 nach Art eines Kugelgelenks schwenk- und kippbeweglich sein. Die Gelenkschale 10 ist fest von einem äußeren Gehäuse 11 der Gelenkeinrichtung 6 übergriffen, so dass die-Beweglichkeit der Gelenkschale 10 gegenüber der kugelförmigen Erweiterung 9 gleichzeitig eine Relativbeweglichkeit - hier in seitlich zur Fahrtrichtung F orientierter Schwenkrichtung und in in Fahrtrichtung F liegender Kipprichtung - zwischen Gehäuse 11 und Gelenkzapfen 8 begründet. Auch ein Verdrehen um die Achse 12 kann zwischen Gehäuse 11 und Gelenkzapfen 8 möglich sein. Derartige Gelenkeinrichtungen 6 können auch beispielsweise in Radgelenken oder bei Vorderachsführungen vorgesehen sein.

Der Gelenkzapfen 8 erweitert hier beispielhaft nach unten hin in einen plattenförmigen Flansch 8a, der zum Beispiel auf ein Differentialgehäuse einer Hinterachse 5 aufgesetzt ist. Der Flansch 8a kann auch eine gegenüber dem Zapfen 8 separate Baueinheit bilden, bzw. der Zapfen 8 kann auch eine gänzlich andere Anbindung an weitere Teile sowie auch eine abweichende Einbaulage aufweisen.

Das Gehäuse 11 umgreift den Gelenkzapfen 8 hier radial vollständig; auch ein nur teilweises Umgreifen ist alternativ möglich. Eine Abdichtung zwischen Gehäuse 11 und Gelenkzapfen 8 bzw. Flansch 8a ist zusätzlich vorgesehen, hier jedoch nicht eingezeichnet.

Die Gelenkeinrichtung 6 umfasst des Weiteren eine gesonderte Verliersicherung 12, 13 für das Gehäuse 11, wobei diese Verliersicherung von einem außerhalb des Zapfens 8 - hier oben - liegenden Bereich 14 des Gehäuses 11 ausgeht und von dort aus in einen zumindest im wesentlichen axialen Kanal 15 des Zapfens 8 eingreift. Der Bereich 14 kann integraler Bestandteil des starren Gehäuseteils 11 a oder eines separaten, mit diesem verbundenen Deckelteils 11 b sein. Dieser Deckelteil 11 b kann zum Beispiel axial außerhalb des Zapfens 8 stehen und in einer nicht ausgelenkten Stellung der Gelehkeinrichtung 6 von der Gelenkachse, 16 zentral durchdrungen sein.

In einer Schwenkstellung, nämlich einer sog. Nullstellung, in der das Gelenk nicht ausgelenkt ist, steht der Bereich 14, von dem aus die Verliersicherung 12, 13 ausgeht, in axialer Verlängerung des Zapfens 8. Die Verliersicherung 12, 13 kann dann geradlinig und axial mittig in dem Eingriffskanal 15 erstreckt sein. In dieser Schwenkstellung ist die Anordnung der Verliersicherung 12, 13 in axialer Draufsicht vollständig rotationssymmetrisch, so dass aus dieser Schwenkstellung heraus eine Schwenkauslenkurig der Gelenkeinrichtung zu allen Seiten mit gleichgroßen Winkeln möglich ist, ohne dass es eine Abweichung von der Isotropie ergibt. Die Beweglichkeit der Gelenkeinrichtung 6 ist daher durch die Verliersicherung 12, 13 in keiner Weise eingeschränkt.

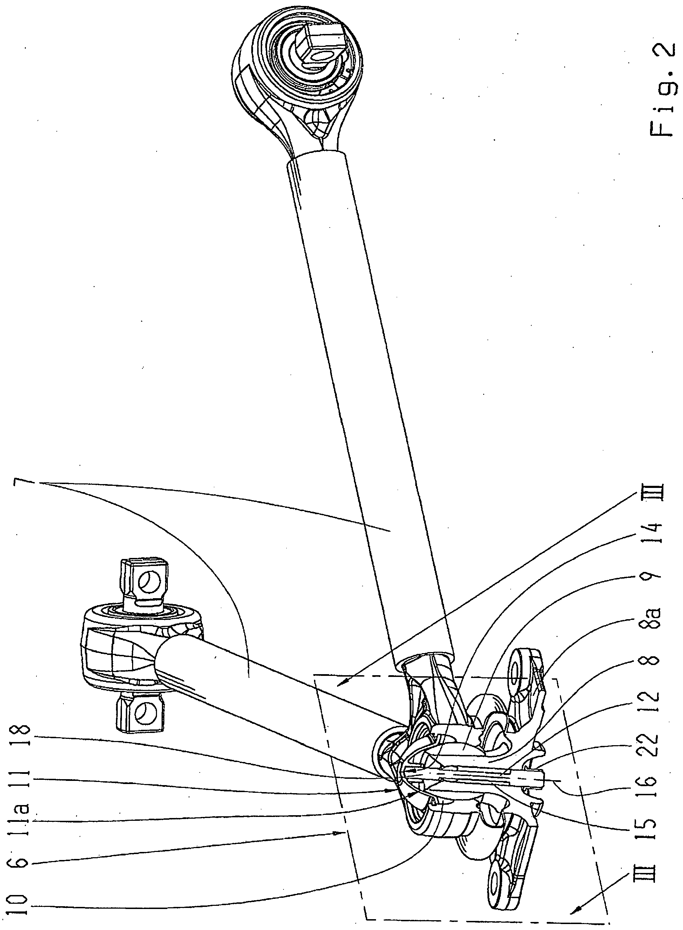

In einem ersten Ausführungsbeispiel nach den Figuren 2 bis 4 umfasst die Verliersicherung 12 einen elastisch verformbaren Schaftbereich 17. Hier ist der elastisch verformbare Schaftbereich 17 von einem Drahtseil gebildet. Alternativ käme auch beispielsweise ein elastisch verformbarer Kunststoffstab, ein metallisches Blechband, eine Kette oder ein Faserwerkstoff in Betracht.

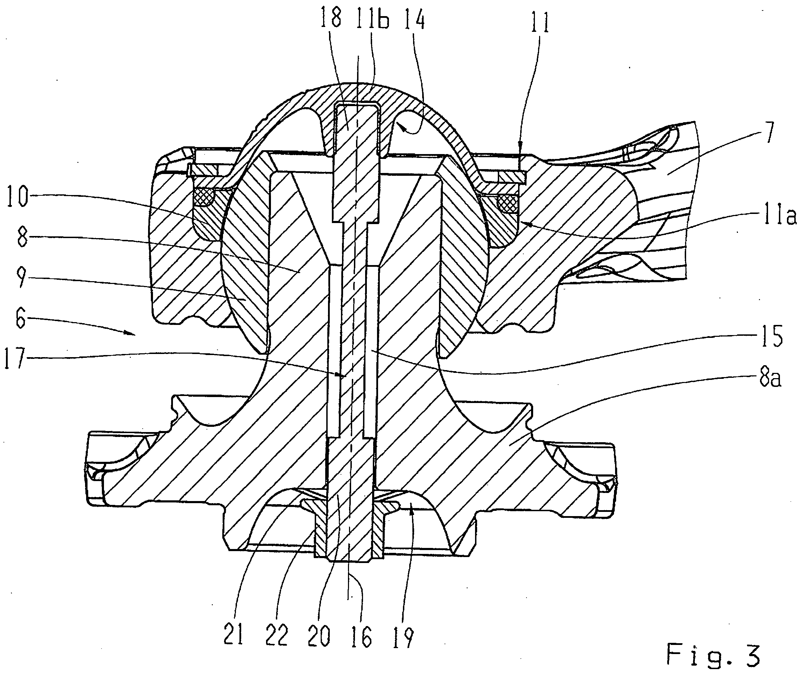

Das hier gezeigte Stahlseil ist beispielsweise in ein Deckelterminal 18 eingepresst, das etwa als hülsenförmiger Körper wie in Figur 3 mit einem Deckelteil 11 b einstückig ausgebildet sein kann. Alternativ kann auch das Deckelterminal 18 zum Beispiel ein Außengewinde aufweisen und in eine Schraubhülse des Deckelteils 11b eingeschraubt sein oder diesen durchgreifen und außenseitig des Deckelteils 11 b gekontert sein.

Auch an dem axial gegenüberliegenden Ende der Verliersicherung 12 sind mehrere Versionen möglich. Hier durchgreift die Verliersicherung 12 den Zapfen 8 axial vollständig. Dabei ist sie an einem ihrem dem Befestigungsbereich am Gehäuse 11 axial gegenüberliegenden Ende 19 des Zapfens 8 abgestützt. Gemäß Figur 3 befindet sich dort ein das Seil klemmend umgreifendes Gewindeterminal 20, auf das zum Beispiel eine axial über eine Federscheibe 21 vorgespannte Mutter 22 aufgesetzt ist. Die Einpresslänge des Seils 17 in das Gewindeterminal 20 beträgt beispielsweise etwas mehr als zwanzig Millimeter, der Seildurchmesser zum Beispiel sechs bis acht Millimeter. Die Federscheibe 21 hält das Seil oder ähnliches 17 auf Spannung, lässt aber genügend Bewegung zu. Arbeitet sich jetzt die Kugelhülse 9a durch das Gehäuse 11, wird das Gehäuse über die Verliersicherung 12 weiter am Flansch 8a festgehalten.

Die Federscheibe 21 ist hierfür am axialen Ende des Zapfens 8 abgestützt. Hier erweitert sich der Zapfen 8 einstückig zu einem plattenartigen Flansch 8a, der den Zapfen 8 mit einem weiteren Fahrzeugteil, zum Beispiel einem Differentialgehäuse 23 einer Achse, verbindet. so dass die Verliersicherung 12 an diesem Flansch 8a gesichert ist. Dieser kann auch gesondert von dem Zapfen 8 ausgebildet sein. Alternativ wäre es auch möglich, die Verliersicherung 12 an dem Zapfen 8 selbst zu sichern.

Zusätzlich kann es möglich sein, eine Verschleißanzeige vorzusehen, die zum Beispiel eine Verformung des Deckelteils 11 b anzeigt, oder es kann ein Element im Deckelteil 11 b angeordnet werden, das bei Zuglast im Seil der Verliersicherung 12 zerstört wird und Farbe außen über die Gelenkeinrichtung 6 verteilt. Ebenso ist am Seil 17 ein Sensor möglich, der bei Zugbelastung oberhalb eines Limits ein Signal ins Fahrerhaus 27 gibt.

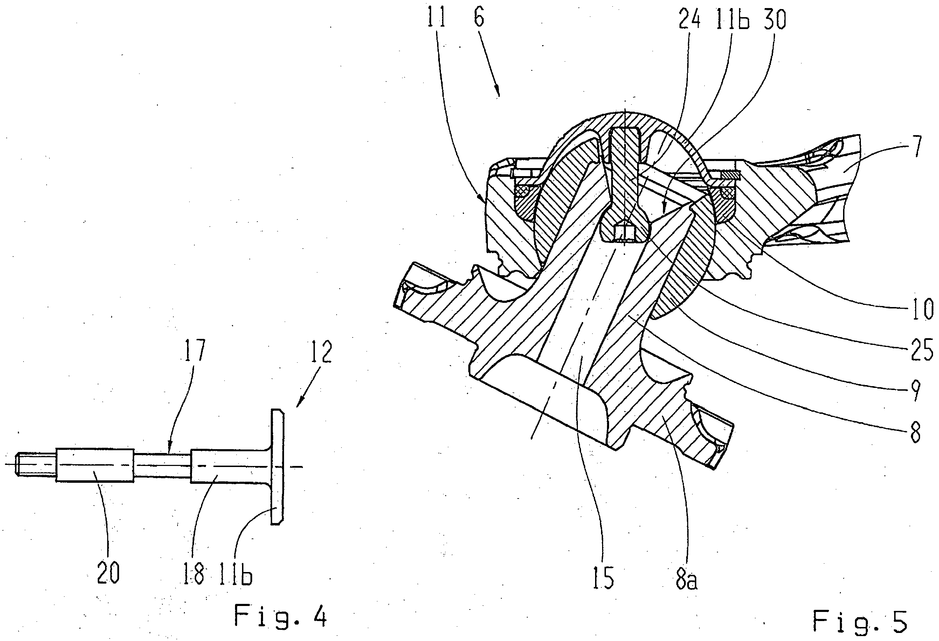

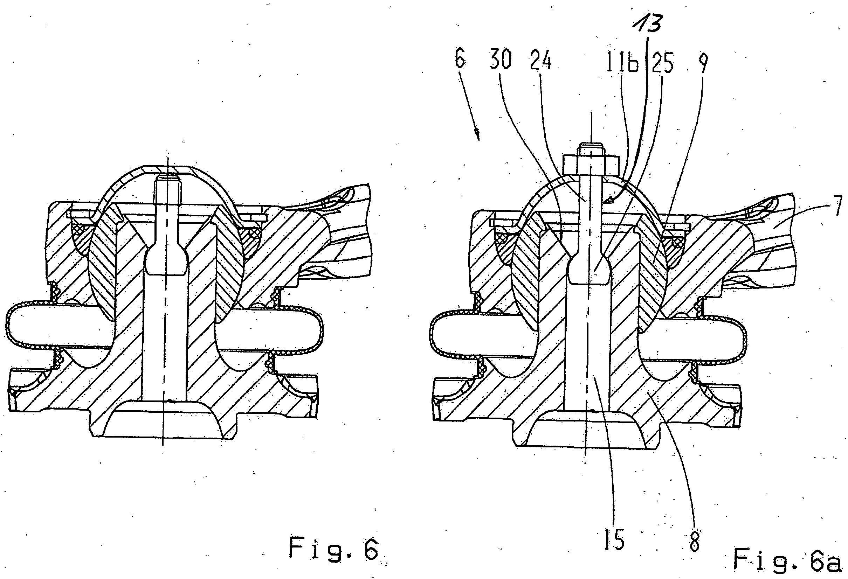

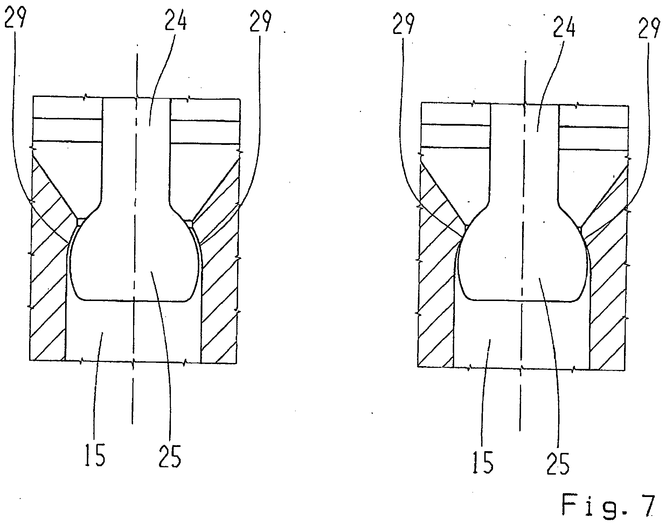

In einer weiteren Ausführungsform der Erfindung nach den Figuren 5 bis 7 umfasst die Verliersicherung 13 einen starren Schaftbereich 24 und stützt sich innerhalb der axialen Erstreckung des Zapfens 8 ab. Hierzu mündet der starre Schaftbereich 24 aus zum Beispiel Stahl oder Kunststoff in einen erweiterten Kopfbereich 25 ein, der sich im axialen Kanal 15 des Zapfens 8 befindet. Dabei fällt sein Zentrum 26 im ordnungsgemäßen Zustand der Gelenkeinrichtung 6 mit dem Drehpunkt des Gelenks 6 zusammen. Dabei ist es möglich, dass der Kopfbereich 25 insgesamt eine Kugelform hat - oder, wie in den Figuren 6 und 7 nur auf seiner dem Schaftbereich 24 zugewandten Seite. Im nicht verschlissenen, ordnungsgemäßen Zustand der Gelenkeinrichtung 6, in der die Verliersicherung nicht beansprucht ist, hält der Kopfbereich 25 einen axialen Abstand zu einem verengenden Flaschenhals 29 des Eingriffskanals 15 (Figur 7 links), wohingegen bei Spiel im Gelenk 6 an der Verliereinrichtung 13 so weit gezogen werden kann, dass diese an dem Flaschenhals 29 anschlagen kann (Figur 7 rechts). Ein solches Anschlagen kann auch zur Detektion des Verschleißes genutzt werden, etwa über Drucksensoren oder das Schließen eines elektrischen Stromkreises.

Wie in Figur 6a sichtbar ist, kann die Verliersicherung 13 auch hier von außen am Deckelteil 11 b gekontert sein oder wie in Figur 6 von innen in den Deckelteil 11 b eingeschraubt oder anders daran lagegesichert sein.

Auch in dieser Version ist die Schwenkbarkeit der Gelenkeinrichtung 6 in jede Richtung voll erhalten. Hierfür ist ein umlaufender konischer Freischnitt 30 vorgesehen, der auch eine große Auslenkung des Gelenks 6 durch Belassen eines Freiraums für den Schaftbereich 24 der Verliersicherung 13 belässt.

In beiden Versionen bleibt daher in jeder Richtung ein Schwenkwinkel von mehr als 50° erhalten.

Es versteht sich, dass eine derartige Gelenkeinrichtung 6 an verschiedenen Stellen im Fahrzeug 1 eingesetzt werden kann, insbesondere auch innerhalb von Lenkungen und Fahrwerksgelenken, wie etwa auch Axialgelenken.

**Bezugszeichen**

| | | | |
|---|---|---|---|
| 1 | Kraftfahrzeug, | 16 | Gelenkachse, |
| 2 | Fahrzeugrahmen, | 17 | elastischer Schaftbereich, |
| 3 | Längsträger, | 18 | Deckelterminal, |
| 4 | Querträger, | 19 | Zapfenende, |
| 5 | Fahrzeugachse, | 20 | Gewindeterminal, |
| 6 | Gelenkeinrichtung, | 21 | Federscheibe, |
| 7 | Lenker, | 22 | Mutter, |
| 8 | Gelenkzapfen, | 23 | Differentialgehäuse, |
| 8a | Flansch, | 24 | starrer Schaftbereich, |
| 9 | kugelförmige Erweiterung, | 25 | Kopfbereich, |
| 10 | Gelenkschale, | 26 | Zentrum des Gelenks, |
| 11 | Gehäuse, | 27 | Fahrerhaus, |
| 11a | starrer Gehäuseteil, | | |
| 11b | Deckelteil, | 29 | Flaschenhals, |
| 12 | Verliersicherung, | 30 | Freischnitt |
| 13 | Verliersicherung, | | |
| 14 | Ausgangsbereich der | | |
| | Verliersicherung, | | |
| 15 | Eingriffskanal im Zapfen, | | |

## Patentansprüche

1. Gelenkeinrichtung (6), umfassend einen axial erstreckten Gelenkzapfen (8) und ein diesen ganz oder teilweise radial umgreifendes Gehäuse (11), wobei der Gelenkzapfen (8) und das Gehäuse (11) relativ zueinander zumindest schwenkbeweglich sind und der Gelenkeinrichtung (6) eine gesonderte Verliersicherung (12;13) für das Gahäuse (11) zugeordnet ist, die mit einem den Gelenkzapfen (8) zentral übergreifenden und dem Gehäuse (11) zugeordneten Deckelteil (11b) oder anderem Teil des Gehäuses (11) einstückig ausgebildet oder daran befestigt ist, **dadurch gekennzeichnet, dass** die Verliersicherung (12;13) einem in zumindest einer Schwenkstellung des Gelenks (6) in axialer Verlängerung des Zapfens (8) gelegenen Bereich (14) des Gehäuses (11) ausgeht und in einen zumindest im wesentlichen axialen Kanal (15) des Zapfens (8) eingreift.

2. Gelenkeinrichtung (6) nach Anspruch 1, **dadurch gekennzeichnet, dass** in dieser Schwenkstellung die Anordnung der Verliersicherung (12;13) in axialer Draufsicht rotationssymmetrisch ist.

3. Gelenkeinrichtung (6) nach Anspruch 1 oder 2, **dadurch gekennzeichnet, dass** aus dieser Schwenkstellung eine Schwenkauslenkung der Gelenkeinrichtung (6) zu allen Seiten mit gleichgroßen Winkeln möglich ist.

4. Gelenkeinrichtung (6) nach Anspruch 1, **dadurch gekennzeichnet, dass** der Bereich (14) des Gehäuses, von dem die Verliersicherung (12;13) ausgeht, der Deckelteil (11b) ist, der in einem starren Gehäusebereich (11a) gehalten ist.

5. Gelenkeinrichtung (6) nach einem der Ansprüche 1 bis 4, **dadurch gekennzeichnet, dass** die Verliersicherung (12) einen elastisch verformbaren Schaftbereich (17) umfasst.

6. Gelenkeinrichtung (6) nach Anspruch 5, **dadurch gekennzeichnet, dass** der elastisch verformbare Schaftbereich (17) von einem Drahtseil gebildet ist.

7. Gelenkeinrichtung (6) nach einem der Ansprüche 1 bis 6, **dadurch gekennzeichnet, dass** die Verliersicherung (12;13) den Zapfen (8) axial vollständig durchgreift.

8. Gelenkeinrichtung (6) nach Anspruch 7, **dadurch gekennzeichnet, dass** die Verliersicherung (12) an einem ihrem Befestigungsbereich (14) am Gehäuse (11) axial gegenüberliegenden Ende (19) des Zapfens (8) abgestützt ist.

9. Gelenkeinrichtung (6) nach Anspruch 7, **dadurch gekennzeichnet, dass** die Verliersicherung an einem den Zapfen mit einem weiteren Fahrzeugteil verbindenden Flansch oder einem das Gelenk abstützenden Fahrzeugteil festgelegt ist.

10. Gelenkeinrichtung (6) nach einem der Ansprüche 1 bis 4, **dadurch gekennzeichnet, dass** die Verliersicherung (13) von dem Gehäusebereich (14), an dem sie gehalten ist, einen starren Schaftbereich (24) umfasst und sich innerhalb der axialen Erstreckung des Zapfens (8) abstützt.

11. Gelenkeinrichtung (6) nach Anspruch 10, **dadurch gekennzeichnet, dass** der starre Schaftbereich (24) in einen erweiterten Kopfbereich (25) einmündet, der sich im axialen Kanal (15) des Zapfens (8) und mit seinem Zentrum im Drehpunkt (26) des Gelenks (6) befindet.

12. Gelenkeinrichtung (6) nach Anspruch 11, **dadurch gekennzeichnet, dass** zwischen dem Kopfbereich (25) und dem Gehäusebereich (14), an dem die Verliersicherung (13) gehalten ist, ein verengender Flaschenhals (29) des Kanal (15) vorgesehen ist.

13. Kraftfahrzeug (1) mit zumindest einer Gelenkeinrichtung (6) nach einem der Ansprüche 1 bis 12.

14. Kraftfahrzeug (1) nach Anspruch 13, **dadurch gekennzeichnet, dass** dieses ein Nutzkraftwagen (NKW) ist und die Gelenkeinrichtung (6) zur Führung einer Achse (5) dieses Kraftfahrzeuges (1) über einen oder mehrere mittelbar oder unmittelbar von einem oder mehreren Rahmenteilen (3;4) zur Gelenkeinrichtung (6) führenden Lenker(n) (7) dient.

## Claims

1. Joint device (6), comprising an axially elongate pivot (8) and a housing (11) which reaches radially around the latter completely or partially, the pivot (8) and the housing (11) being at least pivotably movable relative to one another, and the joint device (6) being assigned a separate captive securing means (12; 13) for the housing (11), which captive securing means (12; 13) is configured in one piece with or fastened to a cover part (11b) or other part of the housing (11) which reaches over the pivot (8) centrally and is assigned to the housing (11), **characterized in that** the captive securing means (12; 13) emanates from a region (14) of the housing (11) which lies in an axial extension of the pin (8) in at least one pivoting position of the joint (6), and engages into an at least substantially axial channel (15) of the pin (8).

2. Joint device (6) according to Claim 1, **characterized in that**, in the said pivoting position, the arrangement of the captive securing means (12; 13) is rotationally symmetrical in an axial plan view.

3. Joint device (6) according to Claim 1 or 2, **characterized in that** a pivoting deflection of the joint device (6) towards all sides with equally large angles is possible from the said pivoting position.

4. Joint device (6) according to Claim 1, **characterized in that** the region (14) of the housing, from which the captive securing means (12; 13) emanates, is the cover part (11b) which is held in a rigid housing region (11a).

5. Joint device (6) according to one of Claims 1 to 4, **characterized in that** the captive securing means (12) comprises an elastically deformable shank region (17).

6. Joint device (6) according to Claim 5, **characterized in that** the elastically deformable shank region (17) is formed by a wire cable.

7. Joint device (6) according to one of Claims 1 to 6, **characterized in that** the captive securing means (12; 13) reaches axially completely through the pin (8).

8. Joint device (6) according to Claim 7, **characterized in that** the captive securing means (12) is supported at one end (19) of the pin (8) which lies axially opposite its fastening region (14) to the housing (11).

9. Joint device (6) according to Claim 7, **characterized in that** the captive securing means is fixed on a flange which connects the pin to a further vehicle part or on a vehicle part which supports the joint.

10. Joint device (6) according to one of Claims 1 to 4, **characterized in that** the captive securing means (13) comprises a rigid shank region (24) of the housing region (14), on which it is held, and is supported within the axial extent of the pin (8).

11. Joint device (6) according to Claim 10, **characterized in that** the rigid shank region (24) opens into a widened head region (25) which is situated in the axial channel (15) of the pin (8) and with its centre at the pivot point (26) of the joint (6).

12. Joint device (6) according to Claim 11, **characterized in that** a narrowing bottleneck (29) of the channel (15) is provided between the head region (25) and the housing region (14), on which the captive securing means (13) is held.

13. Motor vehicle (1) having at least one joint device (6) according to one of Claims 1 to 12.

14. Motor vehicle (1) according to Claim 13, **characterized in that** it is a commercial vehicle (CV), and the joint device (6) serves to guide an axle (5) of the said motor vehicle (1) via one or a plurality of links (7) which lead indirectly or directly from one or more frame parts (3; 4) to the joint device (6).

## Revendications

1. Dispositif d'articulation (6), comprenant un tourillon d'articulation (8) s'étendant axialement et un boîtier (11) venant en prise complètement ou partiellement radialement autour de celui-ci, le tourillon d'articulation (8) et le boîtier (11) pouvant au moins pivoter l'un par rapport à l'autre et une fixation imperdable séparée (12 ; 13) pour le boîtier (11) étant associée au dispositif d'articulation (6), laquelle est réalisée d'une seule pièce avec ou est fixée sur une partie de couvercle (11b) associée au boîtier (11) ou une autre pièce du boîtier (11) venant en prise centralement par-dessus le tourillon d'articulation (8), **caractérisé en ce que** la fixation imperdable (12 ; 13) part d'une région (14) du boîtier (11) située dans au moins une position de pivotement de l'articulation (6) dans le prolongement axial du tourillon (8) et s'engage dans un conduit au moins essentiellement axial (15) du tourillon (8).

2. Dispositif d'articulation (6) selon la revendication 1, **caractérisé en ce que** dans cette position de pivotement, l'agencement de la fixation imperdable (12 ; 13) présente une symétrie de révolution en vue de dessus axiale.

3. Dispositif d'articulation (6) selon la revendication 1 ou 2, **caractérisé en ce qu'**à partir de cette position de pivotement, une déviation par pivotement du dispositif d'articulation (6) vers tous les côtés est possible avec des angles identiques.

4. Dispositif d'articulation (6) selon la revendication 1, **caractérisé en ce que** la région (14) du boîtier depuis laquelle la fixation imperdable (12 ; 13) part, est la partie de couvercle (11b) qui est retenue dans une région rigide du boîtier (11a).

5. Dispositif d'articulation (6) selon l'une quelconque des revendications 1 à 4, **caractérisé en ce que** la fixation imperdable (12) présente une région de tige déformable élastiquement (17).

6. Dispositif d'articulation (6) selon la revendication 5, **caractérisé en ce que** la région de tige déformable élastiquement (17) est formée par un câble en fil métallique.

7. Dispositif d'articulation (6) selon l'une quelconque des revendications 1 à 6, **caractérisé en ce que** la fixation imperdable (12 ; 13) vient en prise complètement axialement à travers le tourillon (8).

8. Dispositif d'articulation (6) selon la revendication 7, **caractérisé en ce que** la fixation imperdable (12) est supportée au niveau d'une extrémité (19) du tourillon (8) axialement opposée à sa région de fixation (14) au boîtier (11).

9. Dispositif d'articulation (6) selon la revendication 7, **caractérisé en ce que** la fixation imperdable est fixée au niveau d'une bride ou d'une partie du véhicule supportant l'articulation reliant le tourillon à une partie du véhicule supplémentaire.

10. Dispositif d'articulation (6) selon l'une quelconque des revendications 1 à 4, **caractérisé en ce que** la fixation imperdable (13) comprend, depuis la région de boîtier (14) à laquelle elle est fixée, une région de tige rigide (24) et s'appuie à l'intérieur de l'étendue axiale du tourillon (8).

11. Dispositif d'articulation (6) selon la revendication 10, **caractérisé en ce que** la région de tige rigide (24) débouche dans une région de tête élargie (25) qui se trouve dans le conduit axial (15) du tourillon (8) et avec son centre au niveau du centre de rotation (26) de l'articulation (6).

12. Dispositif d'articulation (6) selon la revendication 11, **caractérisé en ce qu'**entre la région de tête (25) et la région de boîtier (14) au niveau de laquelle est fixée la fixation imperdable (13), est prévu un col de bride rétréci (29) du conduit (15).

13. Véhicule automobile (1) comprenant au moins un dispositif d'articulation (6) selon l'une quelconque des revendications 1 à 12.

14. Véhicule automobile (1) selon la revendication 13, **caractérisé en ce que** celui-ci est un véhicule utilitaire (NKW) et le dispositif d'articulation (6) sert à guider un essieu (5) de ce véhicule automobile (1) par le biais d'un ou de plusieurs bras oscillants (7) conduisant directement ou indirectement depuis une ou plusieurs parties du châssis (3 ; 4) au dispositif d'articulation (6).
